# EUROPÄISCHE PATENTSCHRIFT

(11) **EP 0 892 485 B1**
(45) Veröffentlichungstag und Bekanntmachung des Hinweises auf die Patenterteilung: **18.09.2002**
(21) Anmeldenummer: 98111061.2
(22) Anmeldetag: 17.06.1998
(51) Int. Cl.: H02M 3/28, H02M 3/335

(54) **Stromversorgungseinrichtung**
Power source device
Dispositif d'alimentation de puissance

(30) Priorität: 15.07.1997 DE 19730243
(43) Veröffentlichungstag der Anmeldung: 20.01.1999
(73) Patentinhaber: ABB PATENT GmbH, 68526 Ladenburg (DE)
(72) Erfinder: Heite, Christian, Dr., 58553 Halver (DE)
(74) Vertreter: Miller, Toivo

(56) Entgegenhaltungen:
- US-A- 5 485 076
- US-A- 5 621 623

## Beschreibung

Die Erfindung bezieht sich auf eine Stromversorgungseinrichtung mit einer Haupt-Stromversorgungseinheit und einer Hilfs-Stromversorgungseinheit.

Bei netzbetriebenen Schaltungsteilen wird neben einer Haupt-Stromversorgungseinheit häufig eine Einrichtung zur Erzeugung einer Hilfsspannung benötigt, wobei die Hilfsspannung oft einen festen Bezug zum Stromnetz, d.h. zur Phase oder zu Null aufweisen muß.

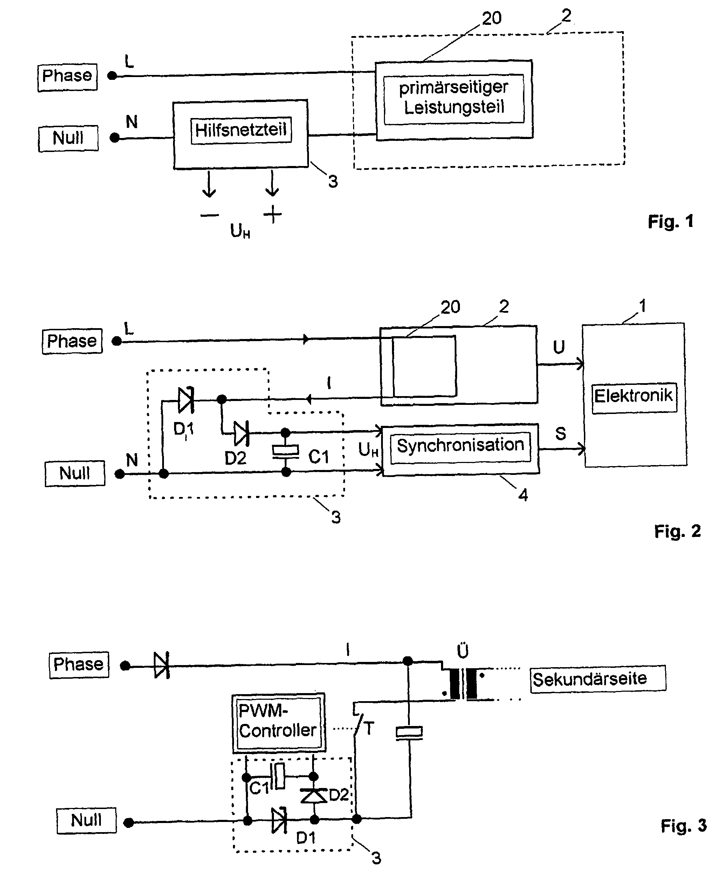

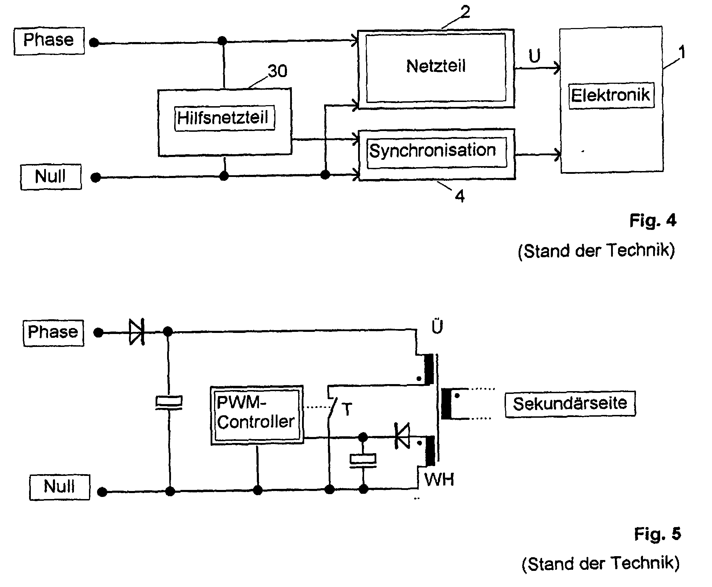

Eine solche Kombination von Haupt- und Hilfs-Stromversorgungsteilen wird beispielsweise zur Speisung von Geräten in Netzbus-Systemen (Power Line Carrier System) benötigt. Figur 4 zeigt eine übliche Anordnung zur Bereitstellung einer Versorgungsspannung U sowie eines Synchronisationssignals S für ein Elektronikgerät 1 eines Netzbus-Systems. Mit Netzbus-System ist hier ein Bussystem der Gebäudesystemtechnik bezeichnet, bei dem keine besonderen Datenleitungen benötigt werden, da die Signalübertragung auf elektrischen Niederspannungsnetzen erfolgt. Die Versorgungsspannung U wird mit einem Haupt-Stromversorgungsteil 2 gebildet. Ein dazu parallel geschaltetes Hilfsnetzteil 30 speist eine Synchronisationseinrichtung 4, die das Synchronisationssignal S liefert.

In gleicher Weise sind typische Stromversorgungseinrichtungen für Dimmerschaltungen aufgebaut, in denen ein Synchronisationssignal zur Markierung der aktuellen Phasenlage benötigt wird.

Ein weiteres Beispiel sind primär getaktete Schaltnetzteile, die im allgemeinen einen netzseitig angeordneten pulsweitenmodulierten Regler benötigen, der häufig aus einer Hilfswicklung des HF-Übertragers des Netzteils versorgt wird. Eine solche Anordnung zeigt Figur 5, wobei eine typische Schaltung dargestellt ist, bei der ein Übertrager Ü eine Hilfswicklung WH trägt, die eine Hilfsspannung für einen PWM-Controller liefert, der einen Schalter T des primär getakteten Schaltnetzteils steuert.

In der Druckschrift US 5 621 623 A ist ebenfalls eine Stromversorgungseinrichtung mit einer Hauptstromversorgungseinheit und einer Hilfsstromversorgungseinheit beschrieben.

Nachteile der bekannten Anordnungen zur Haupt- und Hilfsspannungserzeugung bestehen im schaltungstechnischen Aufwand und in der relativ hohen Verlustleistung des Hilfsnetzteiles.

Der Erfindung liegt daher die Aufgabe zugrunde, eine verbesserte Stromversorgungseinrichtung mit Haupt- und Hilfsnetzteil anzugeben.

Diese Aufgabe wird durch eine Stromversorgungseinrichtung mit den im Anspruch 1 angegebenen Merkmalen gelöst. Vorteilhafte Ausgestaltungen sind in weiteren Ansprüchen angegeben.

Die vorgeschlagene Reihenschaltung des Primärteils einer Haupt-Stromversorgungseinheit mit einer Hilfs-Stromversorgungseinheit hat eine Reihe von Vorteilen. Der schaltungstechnische Aufwand und die Verlustleistung reduzieren sich im allgemeinen erheblich. Die Hilfs-Stromversorgungseinheit läßt sich mit beliebigem Bezug zum Phasen- oder Nullpotential bei beliebiger Polarität der Hilfsspannung ausführen.

Eine weitere Beschreibung der Erfindung erfolgt anhand von in Zeichnungsfiguren dargestellten Ausführungsbeispielen.

Es zeigen:
- Fig. 1: eine Stromversorgungseinrichtung mit Reihenschaltung einer Haupt - und einer Hilfs-Stromversorgungseinheit,
- Fig. 2: als erstes Ausführungsbeispiels eine Stromversorgungseinrichtung für ein Elektronikgerät eines Netzbus-Systems,
- Fig. 3: als zweites Ausführungsbeispiel eine Stromversorgungseinrichtung für ein primär getaktetes Schaltnetzteil,
- Fig. 4 und 5: Stromversorgungseinrichtungen nach dem Stand der Technik.

Figur 1 zeigt eine Reihenschaltung eines primärseitigen Leistungsteils 20 einer Haupt-Stromversorgungseinheit 2 mit einer Hilfs-Stromversorgungseinheit 3. Der so gebildete Primärstromkreis ist an den Nulleiter N und den Phasenleiter L eines Wechselspannungsnetzes anschließbar. Die Hilfs-Stromversorgungseinheit 3 erzeugt eine Hilfsspannung U_{H}.

Figur 2 zeigt ein Elektronikgerät 1, das beispielsweise ein Teilnehmergerät eines Netzbus-Systems oder eine Dimmerschaltung sein kann. Eine Haupt-Stromversorgungseinheit 2 liefert eine Versorgungsspannung U. Der primärseitige Leistungsteil 20 der Haupt-Stromversorgungseinheit 2 führt den Primärstrom I. Die in Reihe geschaltete Hilfs-Stromversorgungseinheit 3 enthält eine vom Primärstrom I durchflossene Zenerdiode D1, an der eine Spannung abfällt, die durch Gleichrichten mittels einer Gleichrichterdiode D2 an einem Stützkondensator C1 als Hilfsspannung U_{H} abgreifbar ist. Die Diode D2 und der Stützkondensator C1 bilden eine Reihenschaltung, die zur Zenerdiode D1 parallelgeschaltet ist. Die Hilfsspannung U_{H} ist verwendet zur Speisung einer Synchronisationseinrichtung 4. Die Stromentnahme aus der Hilfs-Stromversorgungseinheit 3 kann selbstverständlich maximal so groß wie der Primärstrom I sein. Durch Verwendung der Zenerdiode D1 ist die erzeugte Hilfsspannung in vielen Fällen bereits hinreichend gut stabilisiert. Das gezeigte Schaltungsprinzip funktioniert bei beliebigen, also transformatorischen, kapazitiven oder geschalteten Netzteiltypen. Um die Funktion der Haupt-Stromversorgungseinheit 2 nicht zu beeinträchtigen, sollte der Spannungsabfall über der Hilfs-Stromversorgungseinheit 3 einige Volt nicht überschreiten.

Anstelle der Zenerdiode D1 können auch andere Mittel eingesetzt werden, wie z.B. eine bidirektionale Diode, ein Reihenwiderstand oder ein Übertrager.

Figur 3 zeigt einen primärseitigen Leistungsteil eines primär getakteten Schaltreglers mit einem Übertrager Ü. Der Primärstrom I durch die Primärwicklung des Übertragers wird mittels eines Schalters T getaktet, der durch einen PWM-Controller gesteuert wird. Der PWM-Controller wird durch eine Hilfsspannung aus der Hilfs-Stromversorgungseinheit 3 gespeist. Die Hilfs-Stromversorgungseinheit 3 ist in gleicher Weise aufgebaut wie die in Figur 2 dargestellte Stromversorgungseinheit 3. Ein Vergleich mit der Anordnung gemäß Figur 5 zeigt, daß durch die erfindungsgemäße Hilfsspannungserzeugung die sonst notwendige Hilfswicklung auf dem Übertrager entfallen kann. Dadurch entsteht eine erhebliche Kostenreduktion. Dies gilt allerdings nur, wenn die Hilfswicklung nicht als Monitorwicklung zur Regelung des Schaltnetzteils benötigt wird.

## Patentansprüche

1. Stromversorgungseinrichtung mit einer Haupt-Stromversorgungseinheit (2) und einer Hilfs-Stromversorgungseinheit (3) zur Erzeugung einer Hilfsspannung (U_{H}), wobei ein Primärteil (20) der Haupt- Stromversorgungseinheit (2) mit der Hilfs-Stromversorgungseinheit (3) elektrisch in Reihe geschaltet ist, diese Reihenschaltung an ein Niederspannungsnetz (L, N) anschließbar ist, die Hilfs- Stromversorgungseinheit (3) eine vom Primärstrom I durchflossene Zenerdiode (D1) enthält und zur Zenerdiode (D1) eine Reihenschaltung einer Gleichrichterdiode (D2) und eines Kondensators (C1) parallelgeschaltet ist, wobei am Kondensator (C1) die zu erzeugende Hilfsspannung (U_{H}) abgreifbar ist.

2. Stromversorgungseinrichtung nach Anspruch 1, **dadurch gekennzeichnet, daß** die erzeugte Hilfsspannung (U_{H}) einer Synchronisationseinrichtung (4) eines Dimmers oder Elektronikgeräts (1) eines Netzbus-Systems zugeführt ist.

3. Stromversorgungseinrichtung nach Anspruch 1, **dadurch gekennzeichnet, daß** die erzeugte Hilfsspannung (U_{H}) einer Steuereinrichtung eines primär getakteten Schaltreglers zugeführt ist.

## Claims

1. Power supply device having a main power supply unit (2) and an auxillary power supply unit (3) for producing an auxiliary voltage (U_{H}), with a primary section (20) of the main power supply unit (2) being electrically connected in series with the auxiliary power supply unit (3), and in which this series circuit can be connected to a low-voltage network (L, N), with the auxiliary power supply unit (3) containing a zener diode (D1) through which the primary current I flows, and a series circuit comprising a rectifier diode (D2) and a capacitor (C1) being connected in parallel with the zener diode (D1), in which case the auxiliary voltage (U_{H}) which is to be produced can be tapped off across the capacitor (C1).

2. Power supply device according to Claim 1, **characterized in that** the auxiliary voltage (U_{H}) which is produced is supplied to a synchronization device (4) for a dimmer or an electronic appliance (1) of a network bus system.

3. Power supply device according to Claim 1, **characterized in that** the auxiliary voltage (U_{H}) which is produced is supplied to a control device of a primary-clocked switched-mode regulator.

## Revendications

1. Dispositif d'alimentation en courant électrique comportant une unité d'alimentation principale (2) et une unité d'alimentation auxiliaire (3) pour produire une tension auxiliaire (U_{H}), une partie primaire (20) de l'unité d'alimentation principale (2) étant connectée électriquement en série avec l'unité d'alimentation auxiliaire (3), ce circuit série pouvant être connecté à un réseau à basse tension (L, N), l'unité d'alimentation auxiliaire (3) comportant une diode Zener (D1) parcourue par le courant primaire I et un circuit série formé d'une diode redresseuse (D2) et d'un condensateur (C1) étant branché en parallèle avec la diode Zener (D1), la tension auxiliaire (U_{H}) à produire étant disponible aux bornes du condensateur (C1).

2. Dispositif d'alimentation en courant électrique selon la revendication 1, **caractérisé en ce que** la tension auxiliaire (U_{H}) produite est appliquée à un circuit de synchronisation (4) d'un variateur de lumière ou d'un appareil électronique (1) d'un système de bus de réseau.

3. Dispositif d'alimentation en courant électrique selon la revendication 1, **caractérisé en ce que** la tension auxiliaire (U_{H}) produite est appliquée à un circuit de commande synchronisation (4) d'un régulateur de commutation à synchronisation primaire.
